# EUROPEAN PATENT APPLICATION

(11) **EP 1 906 626 A1**
(43) Date of publication of application: **02.04.2008**
(21) Application number: 06020319.7
(22) Date of filing: 27.09.2006
(51) Int. Cl.: H04L 29/08, H04L 29/06

(54) **Method, terminal and server for extending a service subscription duration in a communication system**

(71) Applicant: Nokia Siemens Networks GmbH & Co. KG, 81541 München (DE)
(72) Inventor: Cools, Luc, 2400 Mol (BE); Vrancken, Johnny, 3500 Hasselt (BE)

(57) **Abstract**

The present invention provides a method, terminal and server for extending a service subscription duration in a communications system with at least one terminal and at least one server. The method is characterized in that the subscription duration is autonomously extended by the server upon or before expiry of the subscription duration.

## Description

The present invention relates to a method, terminal and server for extending a service subscription duration in a communications system.

A communications system generally offers various services to its users. A user can subscribe to a service, e.g. by sending a subscription application message to a server. Typically, a subscription to a service is time-limited, i.e. the subscription is valid for a period of time or duration defined by an expiry date. When the expiry date is exceeded, the subscription of said user to said service is no longer valid, i.e. the subscription expires.

The expiry date can be a relative value (e.g. "in 10 minutes") or an absolute value (e.g. "10.09.2006 13h23").

In order to avoid invalidation or termination of the subscription, the user can apply for an extension of the duration of his subscription to the service by sending a further subscription application message to the server.

In connection with the Session Initiation Protocol (SIP), the Internet Engineering Task Force (IETF) published the Request For Comments document 3265 (RFC 3265), providing an extensible framework by which SIP nodes can request notifications from remote nodes indicating that certain events have occurred, i.e. an event notification mechanism. The document describes a concept allowing a terminal to get notified about events that occur. To this aim, the terminal subscribes to an event notification service. Upon subscription, a server offering said event notification service notifies the terminal about the requested events. This concept is based on subscribe messages and notify messages. The subscription lifetime, i.e. the duration of the subscription with respect to an expiry date has to be agreed between the terminal and the server.

According to the concept described in RFC 3265, the terminal may propose a subscription lifetime, but it is the server who determines the subscription lifetime, i.e. the subscription duration. The server rejects the suggested subscription lifetime (if any is provided) if it is too short. Furthermore, the agreed subscription lifetime granted by the server will not be longer than the lifetime proposed by the terminal.

In normal circumstances, the subscription either expires on the agreed expiry date, or ends earlier on request of the terminal.

In case the subscription duration has to be extended, the terminal must re-subscribe by sending an appropriate message to the server before the expiry date is exceeded. Hence, the re-subscription causes additional signaling initiated by the terminal that should be avoided.

Solutions are known for some situations. For instance, a kind of infinite subscription lifetime may be granted. Then the terminal can only unsubscribe. Such kind of solutions, however, are not backward compatible with respect to the standard subscription process as described in RFC 3265 mentioned above. Furthermore, such kinds of solutions require a policy or mechanism at server side to deal with exceptional cases, e.g. when the terminal is no longer available.

It is an aim of the invention to address the problems discussed above.

Said problems are solved by the features mentioned in the independent claims. Preferred embodiments of the invention are described in the dependant claims.

The present invention provides a method for extending a service subscription duration in a communications system with at least one terminal and at least one server. The method is characterized in that the subscription duration is autonomously extended by the server upon or before expiry of said subscription duration.

Furthermore, the present invention provides a server, a terminal and a notification message for executing the presented method.

The proposed invention provides the advantage that additional terminal signalling for extending a subscription duration as necessary in the above described method is avoided. Furthermore, in case of applying the presented method in a SIP based communications system, the proposed solution is an extension of the established existing subscribe / notify mechanism. It is important to note that the proposed method is fully backward compatible to the known subscription method described in RFC 3265.

In another refinement of the method, service represents an event notification service.

In another refinement of the method, the method further comprises at least one event notification wherein the server notifies the terminal about an event by sending a notification message.

In another refinement of the method, the server informs the terminal about the extended subscription duration using said notification message. Alternatively to the method described in RFC 3265 with the terminal sending a re-subscription message, the server sends information about the extended subscription duration inside the notification message. This avoids terminal-initiated signalling in case of an upcoming expiry of the subscription duration and furthermore ensures backward-compatibility for terminals not comprising means for applying the presented method.

In another refinement of the method, said notification message further comprises information about a new expiry date for the subscription duration.
There is no need for the server to explicitly mention the upcoming expiry date. Nevertheless, it is also possible that the notification message further comprises information about the expiry of the subscription duration.

In another refinement of the method, the event notification service is implemented according to RFC 3265.

The invention furthermore provides a terminal with means for subscribing to a service for a subscription duration. The terminal has further means for acknowledging receipt of a subscription extension autonomously granted by a server upon or before expiry of the subscription duration.

The invention furthermore provides a server with means for autonomously extending a subscription duration of a terminal upon or before expiry of the subscription duration.

In another embodiment, the server further comprises means for informing said terminal about the extended subscription duration along with a notification message, said notification message comprising information about an upcoming expiry of the subscription duration and a new expiry date for the subscription duration.

Preferred embodiments of the present invention will now be described with reference to the accompanying drawings in which:
Fig. 1: shows a known sequence of subscribe and notify messages
Fig. 2: shows an enhanced sequence of subscribe and notify messages according to the inventive method.

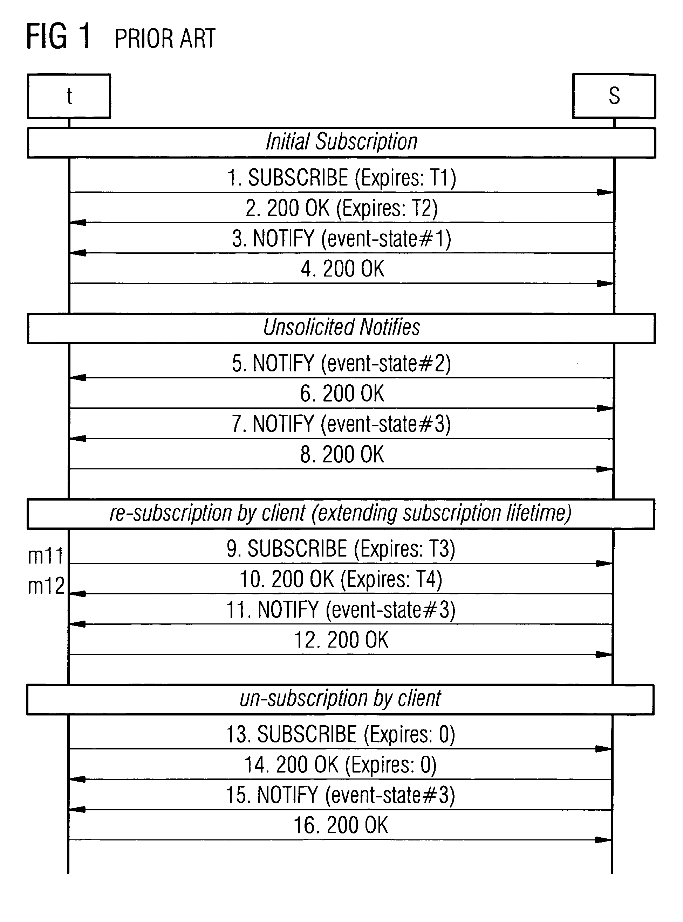

Fig. 1 shows a known sequence of subscribe and notify messages as described in RFC 3265. A terminal t subscribes to a service provided by a server s by sending a subscription message, optionally with a proposed expiry date T1. The server s approves the subscription by sending an OK message, furthermore comprising a granted expiry date T2. By sending the OK message, the subscription of the terminal t to said service is valid. In case of said service being an event notification service, the server s will send notification messages to the terminal t with regard to events requested by the terminal t.

In case of an upcoming expiry of said granted expiry date T2, the terminal t has to re-subscribe to said service by sending an appropriate re-subscription message m11, optionally comprising a second proposed expiry date T3. The server s approves the re-subscription by sending a further OK message m12, furthermore comprising a second granted expiry date T4. By sending the further OK message, the re-subscription of the terminal t to said service is valid and the subscription lifetime is extended until the second granted expiry date T4.

As described above, this standard method has the disadvantage of additional terminal-initiated signalling m11, m12 necessary to extend the terminal's subscription to said service.

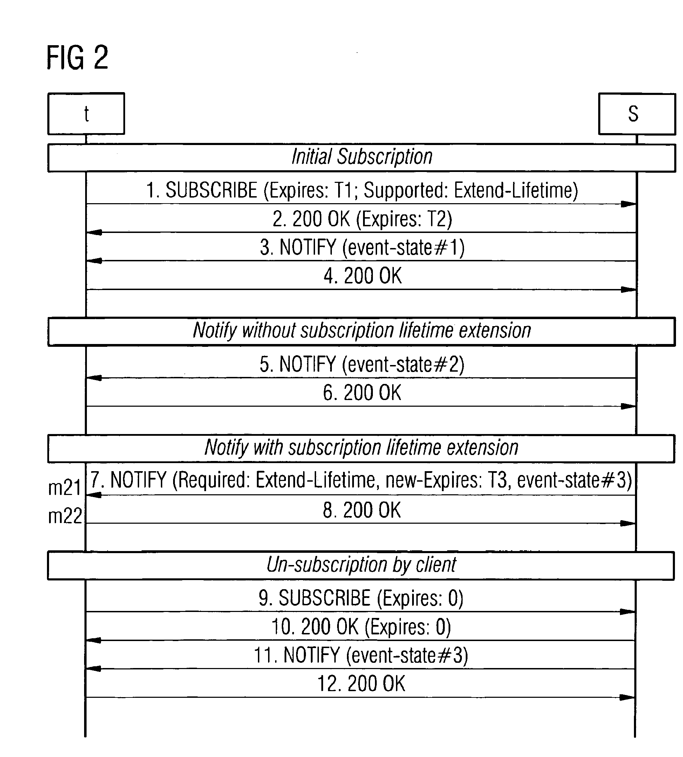

Fig. 2 shows an enhanced sequence of subscribe and notify messages according to the inventive method avoiding the described problem of additional terminal-initiated signalling in case of the terminal's re-subscription respectively subscription lifetime extension with respect to said service in case of applying the presented method in a SIP based communications system and an event notification service as described in RFC 3265.

In case of an upcoming expiry of said granted expiry date T2, the server s autonomously extends said subscription duration by sending a notification message m21 to the terminal. Said notification message m21 complies with a standard event notification message as described in RFC 3265 but is further extended by information about said upcoming expiry of said subscription duration and a new expiry date for said subscription duration. The terminal t only acknowledges the subscription extension by sending a standard OK message m22.

The invention furthermore provides a terminal t with means for subscribing to a service for a subscription duration, and with means for acknowledging reception of a subscription extension, said subscription extension autonomously granted by a server s based on an upcoming expiry of said subscription duration.

In contrast to the standard method as shown in figure 1, the presented method avoids additional terminal-initiated signalling in case of an upcoming expiry of said subscription duration. The server s uses a backward-compatible, standard event notification message, extended by appropriate information with respect to a granted new expiry date for said subscription duration.

The presented method can be applied in any communications system providing a server-based service subscribed by terminals.

## Claims

1. A method for extending a service subscription duration in a communications system with at least one terminal (t) and at least one server (s),
**characterized in that**
the subscription duration is autonomously extended by said server (s) upon or before expiry of said subscription duration.

2. The method as claimed in any of the preceding claims, wherein said service represents an event notification service.

3. The method in claim 2, further comprising at least one event notification wherein said server (s) notifies said terminal (t) about an event by sending a notification message (m21).

4. The method in claim 3, wherein said server (s) informs said terminal (t) about the extended subscription duration using said notification message (m21).

5. The method in claim 3, wherein said notification message (m21) further comprises information about a new expiry date for said subscription duration.

6. The method in claim 2, wherein the event notification service is implemented according to RFC 3265.

7. Terminal (t) with means for subscribing to a service for a subscription duration, and with means for acknowledging receipt of a subscription extension, said subscription extension autonomously granted by a server (s) upon or before expiry of the subscription duration.

8. Server (s) with means for autonomously extending a service subscription duration of a terminal (t) upon or before expiry of said subscription duration.

9. The server in claim 8, further comprising means for informing said terminal (t) about the extended subscription duration using a notification message (m21), said notification message (m21) comprising information about expiry of said subscription duration and a new expiry date for said subscription duration.

10. Notification message (m21) sent by a server (s) for extending a subscription duration of a terminal's (t) subscription to a service, said notification message (m21) comprising
- an event notification, and
- a new expiry date for said subscription duration.

11. Communications system with at least one terminal (t) according to claim 7 and at least one server (s) according to claim 8.
